# EUROPEAN PATENT APPLICATION

(11) **EP 0 658 500 A1**
(43) Date of publication of application: **21.06.1995**
(21) Application number: 93203536.3
(22) Date of filing: 15.12.1993
(51) Int. Cl.: B65G 65/04, E02F 7/02

(54) **Crane machine**

(71) Applicant: Rigter, Gerardus Franciscus Johannes Maria, NL-3755 NP Eemnes (NL)
(72) Inventor: Rigter, Gerardus Franciscus Johannes Maria, NL-3755 NP Eemnes (NL)
(74) Representative: Smulders, Theodorus A.H.J., Ir.

(57) **Abstract**

A crane machine having a carriage (1) and a crane (2), projecting from the carriage (1), with an arm (3) and a scoop (4, 5) carried by the arm (3) for scooping and delivering bulk goods (6). The crane machine is provided with a conveyor track (7) extending from one end to the other end of the carriage (1).

By depositing scooped bulk goods on the conveyor track (7) each time, instead of on the location where said bulk goods are to be dumped, and conveying them over the conveyor track (7) to that location, a considerably greater capacity for transferring bulk goods (6) can be realized.

## Description

The invention relates to a crane machine comprising a carriage and a crane projecting from the carriage, with an arm and at least one scoop, carried by the arm, for scooping and delivering bulk goods.

Such crane machines have been generally known from practice for a long time.

Such crane machines are employed for instance for transferring bulk goods, such as beets, from a pile into a container, such as a loading body of a truck. An advantage of this manner of loading is that it is universally applicable and requires no special provisions for storing the bulk goods to be transferred.

However, a drawback of loading bulk goods in this manner is that it consumes much time. In general, this is all the more objectionable as loading does not only take up working time of the crane operator and machine time of the crane machine, but also working time of the driver of the vehicle to be loaded and operating time of that vehicle.

The object of the invention is to provide a crane machine by means of which bulk goods dumped in any manner, for instance on the ground, can be transferred more rapidly into any container, such as the loading body of a truck.

According to the present invention, this object is realized by fitting a crane machine of the type indicated in the first paragraph with a conveyor track extending from one end to the other end of the carriage.

With this crane machine, the bulk goods scooped by means of the scoop suspended from the arm need not each time be conveyed to the loading body over the entire distance by means of the arm. Instead, the crane can be positioned relative to the pile of bulk goods such that a first end of the conveyor track is proximal to that pile. Subsequently, the loading body can be moved under the second, opposite end of the conveyor track For the transfer of the bulk goods to the loading body it is now only required that the bulk goods scooped from the pile be brought close to the first end above the conveyor track, after which they can be deposited on the conveyor track. The bulk goods deposited are then conveyed to the loading body by the conveyor track, while the arm of the crane and the scoop can be operated for scooping a next amount of bulk goods.

In this manner, the crane is capable of transferring the bulk goods to the loading body at a higher speed, without the necessity of setting strict requirements with regard to the storage of the bulk goods to be transferred and the relative positions of the bulk goods to be transferred and the loading body to be loaded.

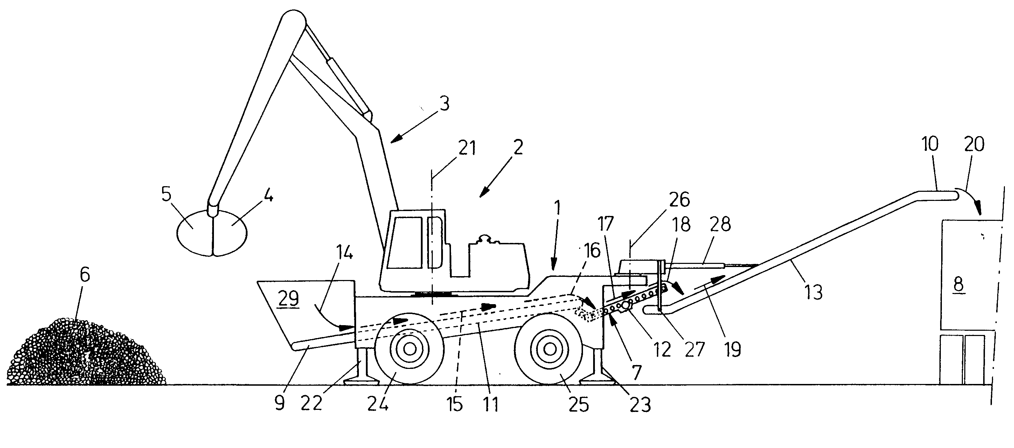

Hereinafter, the invention will be further explained on the basis of a preferred exemplary embodiment, with reference to the accompanying drawing. The drawing shows a side elevation of the crane machine according to the preferred exemplary embodiment of the invention.

The drawing shows a crane machine with a carriage 1 and a crane 2, projecting from the carriage 1, with an arm 3 and two scoops 4, 5, carried by the arm, for scooping and discharging bulk goods 6. Together, the scoops 4, 5 shown form a so-called beet container, in particular suitable for scooping sugar beets and the like. Depending on the intended use, instead of the scoops 4, 5 shown, other types of scoops can be used as well, for instance co-operating or single scoops for scooping sand and gravel or grabs for scooping manure. The crane machine further comprises a conveyor track 7, extending from one end to the other end of the carriage 1.

For transferring bulk goods 6 to a loading body 8 of a truck, the crane can be positioned such that a first, front end 9 of the conveyor track 7 is proximal to the bulk goods 6 to the transferred and the second, rear end 10 of the conveyor track is remote from the bulk goods. Subsequently, the loading body 8 can be positioned under the rear end 10 of the conveyor track 7.

In operation, bulk goods 6 are scooped by means of the scoops 4, 5 and moved to above the front end 9 of the conveyor track 7 by means of the crane arm 3, where the scoops 4, 5 are operated such that the bulk goods are deposited on the front end 9 of the conveyor track 7. The conveyor track is made up of three conveyors 11, 12, 13, each driven for conveying the bulk goods dumped onto the front end 9 of the conveyor track 7 in the direction indicated by the arrows 14-20. The crane arm 3 need not displace the scoops 4, 5 over the entire distance between the pile 6 and the loading body 8 each time, but need only be displaced over a small distance between the pile of bulk goods 6 and the front end 9 of the conveyor track 7, enabling the transfer of a substantial amount of bulk goods per unit of time.

The crane 2 is rotatable relative to the carriage 1 about the axis 21. If the crane machine is positioned relative to the pile of bulk goods 6 such that, in top plan view, the front end 9 of the conveyor track 7 is in line with the pile of bulk goods 6 and the fixed end of the crane arm 3, this rotation possibility need not be utilized and it may suffice to move the scoops 4, 5 backward and forward radially relative to the axis 21 and vertically. Even if an optimal positioning of the crane machine relative to the pile of bulk goods 6 is not possible, for instance due to lack of space, the crane 2 still requires considerably slighter rotations about the axis 21 than in the case where known crane machines are used.

The crane machine is fitted with supporting legs 22, 23 for obtaining a stable support of the crane machine during operation. To make the crane machine mobile, the carriage 2 is fitted with four wheels in a conventional configuration, of which only the left-hand wheels 24, 25 are shown in the drawing. It is also possible to fit the carriage with wheels around which track chains have been provided.

The conveyor track 7 extends in the direction of travel of the carriage 1. This offers the advantage that the ends 9, 10 of the conveyor track 7 may project from the carriage 1 without the crane machine thereby acquiring a width such that transport over the public road is hampered.

Two wheels 24, 25 of the carriage 1 are located on one side of the conveyor track 7 and two other wheels of the carriage are located on the other side of the conveyor track 7. As a result, the conveyor track 7, in top plan view, extends between the wheels, so that a compact construction of the crane machine is realized.

The conveyor track 7 extends under the crane 2. As a result, and the more so because of the fact that the conveyor track intersects the vertical swivel axis (21) of the crane, the compact construction of the crane machine according to the invention is further promoted. Further, the central position of the conveyor track 7 permits the front end 9 thereof to be positioned in the vicinity of the fixed end of the crane arm 2, which is also in a central position, so that a movement of the scoops 4, 5 directed substantially radially from the fixed end of the crane arm 2 is sufficient for transferring the bulk goods 6 to the front end 9 of the conveyor track 7 without requiring a crane arm with a wide range. The section of the conveyor track 7 located under the crane 2 is preferably designed as a conveyor 11 which is part of the conveyor track 7.

One of the conveyors of the conveyor track 7 is designed as a cleaning bed 12 for removing material adhering to the bulk goods. Thus, during loading, adherent dirt is removed to a substantial degree from the bulk goods to be loaded, so that it need not be conveyed along. This is advantageous in particular for loading sugar beets, because in that case it is on the one hand of substantial economic importance that the carrying capacity of the truck be utilized optimally, while on the other hand the removal of dirt adhering to the beets (the so-called tare) from the sugar refinery involves additional cost. In particular, problems arise as a result of a large amount of tare being concentrated at one location. The dumping of the tare brought to the sugar refinery at one or a limited number of locations involves a considerable burden to the environment. These problems are substantially overcome by cleaning the beets during loading, as a substantial part of the tare remains distributed in the agricultural areas and is not transported to the sugar refinery.

Because the cleaning bed 12 is integrated into the crane machine according to the invention, no separate cleaning apparatus is required, which would have to be carried along to the locations where the sugar beets are to be scooped up and loaded and for which usually insufficient space is present at those locations.

One of the conveyors of the conveyor track 7 is a vertical conveyor 13, projecting from the carriage 1 at one end. By means of this vertical conveyor 13, which forms the conveyor of the conveyor track 7 located furthest downstream, the bulk goods 6 to be loaded can be lifted to above the loading body 8 of a truck. As a result, the front end 9 of the conveyor track 7 can be located close to the ground, at which level the bulk goods 6 are generally stored. This in turn yields the advantage that in order that the bulk goods 6 scooped can be deposited on the front end 9 of the conveyor track 7, they need to be displaced vertically over a small distance only. Further, owing to the presence of the vertical conveyor 13, the central section of the conveyor track 7 may also be positioned relatively low, allowing it to extend under the crane 2 and along the bottom side of the carriage 1, which, as has been explained hereinabove, is favorable for obtaining a compact construction of the crane machine.

The vertical conveyor 13 is of a swivelling construction. Thus, the position of the rear end 10 of the conveyor track, formed by the free end of the vertical conveyor 13, can be varied without displacing the crane machine, and be adjusted to the height of the loading body 8 to be loaded. The height adjustability of the free end of the vertical conveyor 13 is obtained by virtue of the vertical conveyor 13 being pivotable about a horizontal transverse axis 27. The pivotal action of the vertical conveyor 13 about the horizontal transverse axis 27 is operated by a hydraulic cylinder 28. Displacements of the free end of the vertical conveyor 13 in a horizontal plane can be realized by slewing the vertical conveyor about a vertical axis 26. Slewing in a horizontal plane is advantageous in particular for obtaining a uniform filling of a loading body 8 to be loaded without displacement of the loading body 8 or the crane machine. Further, the fact that the vertical conveyor 13 is slewable about the vertical axis 26 provides the possibility of loading loading bodies 8 arranged in different positions relative to the crane machine - for instance behind, to the left or to the right of the crane machine. Finally, due to the slewability of the vertical conveyor 13 about the vertical axis 26, the length of the crane machine during transport can be limited by slewing vertical conveyor 13 through to such an extent that it projects upward obliquely from the carriage 1.

Because the front end 9 of the conveyor track 7 is provided with a bunker 29, the capacity of the crane machine is further enhanced. The bunker forms a buffer between the intermittent supply of bulk goods 6 by the crane arm 3 and the substantially constant discharge of bulk goods 6 by the conveyor track 7, allowing the transport capacity of the conveyor track 7 to be utilized optimally.

## Claims

1. A crane machine comprising a carriage (1) and a crane (2) projecting from the carriage (1), with an arm (3) and at least one scoop (4, 5), carried by the arm (3), for scooping and delivering bulk goods (6), **characterized by** a conveyor track (7) extending from one end to the other end of the carriage (1).

2. A crane machine according to claim 1, wherein the conveyor track (7), in top plan view, extends parallel to the direction of travel of the carriage (1).

3. A crane machine according to claim 1 or 2, wherein the carriage (1) is provided with at least two wheels (24, 25) on one side of the conveyor track (7) and at least two wheels on the other side of the conveyor track (7).

4. A crane machine according to any one of the preceding claims, wherein the conveyor track (7) extends under the crane (2).

5. A crane machine according to claim 4, wherein the crane (2) is slewable about a vertical axis (21) and the conveyor track (7) intersects said vertical axis (21).

6. A crane machine according to claim 4 or 5, wherein the conveyor track (7) comprises a conveyor (11) extending under the crane (2).

7. A crane machine according to any one of the preceding claims, wherein the arm (3) of the crane (2) has a fixed end and the conveyor track (7) extends under said end.

8. A crane machine according to any one of the preceding claims, wherein the conveyor track (7) comprises at least one conveyor at least partly designed as a cleaning bed (12) for removing material adhering to the bulk goods (6).

9. A crane machine according to any one of the preceding claims, wherein the conveyor track (7) comprises a vertical conveyor (13) projecting from the carriage (1) at one end.

10. A crane machine according to claim 9, wherein the vertical conveyor (13) is capable of swivelling.

11. A crane conveyor according to any one of the preceding claims, wherein the end of the conveyor track (7) is provided with a bunker (29).
